# EUROPEAN PATENT SPECIFICATION

(11) **EP 0 526 092 B1**
(45) Date of publication and mention of the grant of the patent: **22.05.1996**
(21) Application number: 92306716.9
(22) Date of filing: 23.07.1992
(51) Int. Cl.: H02K 5/22, H01R 13/428

(54) **Miniature electric motors**
Elektrische Kleinmotoren
Moteurs électriques miniatures

(30) Priority: 25.07.1991 JP 184957/91; 31.03.1992 JP 75072/92
(43) Date of publication of application: 03.02.1993
(73) Proprietor: MABUCHI MOTOR KABUSHIKI KAISHA, Matsudo-shi, Chiba-ken (JP)
(72) Inventor: Aoyagi, Norio, Matsudo-shi, Chiba-ken (JP); Koide, Kouichi, Matsudo-shi, Chiba-ken (JP); Ohaku, Yasuo, Matsudo-shi, Chiba-ken (JP)
(74) Representative: Hitchcock, Esmond Antony

(56) References cited:
- EP-A- 0 218 484
- EP-A- 0 384 686
- DE-A- 3 726 839
- DE-A- 3 736 388
- FR-A- 2 550 895
- GB-A- 2 142 192

## Description

This invention relates to miniature electric motors of the type used for example in audio equipment and precision equipment generally. Particularly, it relates to the fitting of input terminals to the case cap of such motors.

Miniature electric motors typically comprise a motor case in the form of a cylinder closed at one end, with the other end closed by an end cap which is formed in a plastics material. Bearings for the motor rotor are disposed in the closed end of the case and the end cap respectively. Input terminals are mounted in the end cap for connection on the outer face to a power source, and on the inner face to brushes which make sliding contact with a commutator on the rotor to drive the motor. The terminals may be mounted in the end cap by press-fitting in openings through the cap, with projections making frictional contact with the internal surface of the openings as they are installed. These projections serve to prevent unintentional removal, either by remaining in the openings in frictional contact with the internal surfaces thereof, or by expanding beyond the boundaries of the openings on the outer face. This however is not always sufficient to resist external pressure on a terminal. Further, as a terminal is installed, the projections can break up the internal surface of the openings, seriously damaging the cap, and releasing chips which can damage the motor.

An electric motor is described in British Specification No. 2,142,192 in which the input terminals are in the form of L-shaped strips of metal, and the longer limbs of the terminals are inserted through holes in the end cap of the motor. The shorter limbs are fixed to the inner surface of the cap by means of rivets, for example. The terminals are also secured to the cap by deformation of shoulders formed in the longer limbs.

The present invention is directed at the mounting of input terminals in an end cap for the case of an electric motor, which end cap is formed in a plastics material and has an inner and an outer face. The terminals are press-fitted through the cap from the inner face thereof such that they project from the outer face. The method of the invention comprises forming lanced and raised elements on the projecting portions of the terminals, the elements extending over the outer face with their free ends in contact therewith to prevent withdrawal of the terminals through the cap. This method can be included in the manufacture of the entire motor. The invention therefore also provides an electric motor with input terminals fitted in the manner described above.

The invention will now be described by way of example, and with reference to the accompanying drawings wherein:
Figure 1 is a longitudinal partly sectioned side view of a known miniature motor;
Figure 2 is a detail view illustrating a known technique for fitting an input terminal to a case cap;
Figures 3 and 4 are detail views illustrating another known technique for fitting an input terminal to a case cap;
Figure 5 is a detail view illustrating still another known technique for fitting an input terminal to a case cap;
Figure 6 is a part-sectional side view of a case cap in an embodiment of this invention;
Figure 7 is a detail view in direction A in Figure 6;
Figure 8 illustrates an input terminal fitting jig used in an embodiment of this invention; and
Figure 9 is an enlarged perspective view illustrating a receiving blade and a lancing and raising blade of the type shown in Figure 8.

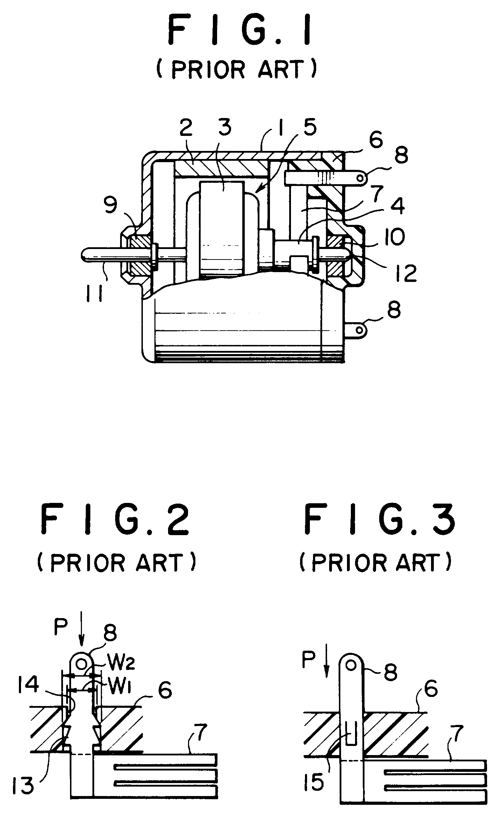

Known techniques for mounting input terminals in motor end caps will first be described with reference to Figures 1 to 5.

In Figure 1 a motor case 1 made of a metallic material, such as mild steel, is formed into a bottomed hollow cylindrical shape, and has an arc-segment-shaped permanent magnet 2 fixedly fitted on the inner circumferential surface thereof. A case cap 6 made of an insulating material is fitted to an open end of the case 1. A rotor 5 comprising shafts 11, 12, an armature 3 facing the permanent magnet 2, and a commutator 4 is rotatably mounted in bearings 9, 10 in the case and cap respectively. The free ends of brushes 7 make sliding contact with the commutator 4, and are connected with terminals 8 disposed on the case cap 6. The motor is driven in a conventional manner by connecting the terminals 8 to an electrical power source.

The fitting of each input terminal 8 to the case cap 6 in the miniature motor of Figure 1 is shown in Figure 2. A serrated projection 13 is provided on the side edge of the input terminal 8, which is press-fitted into a hole 14 provided on the case cap 6. The width W₁ of the hole 14 is made slightly smaller than the width W₂ of the serrated projection 13 on the input terminal 8, such that the projection 13 proceeds in the hole 14 while deforming or shaving off the side edge of the hole 14, holding the input terminal 8 securely in position.

With the above construction, even when an external force is applied to the input terminal 8 in the direction shown by the arrow P, the input terminal 8 and the brush 7 connected thereto or formed integrally therewith can be held in place. However, because the terminal 8 is held in place only by frictional forces between the projection 13 and the hole 14, the resistance to the external force P is very limited. Further, when the input terminal 8 is press-fitted into the hole 14, as described above, it can be deformed, or cause chips to adhere on the inside surface of the case cap 6 or on the surfaces of the input terminal 8, the brush 7, or other motor components, resulting in deterioration in the characteristics of the motor.

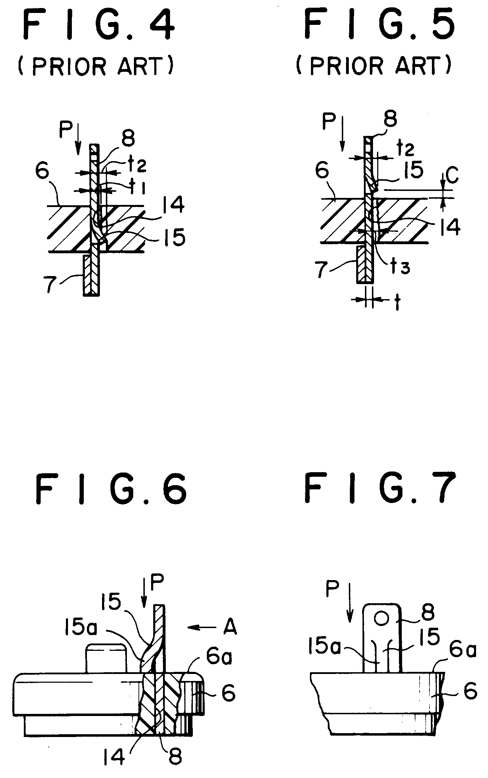

Figures 3 and 4 are orthogonal views illustrating another example of means for fitting the input terminal 8 to the case cap 6. Like parts are indicated by like reference numerals shown in Figure 2. In Figures 3 and 4, a lanced and raised retainer piece 15 is provided in advance in the central part of the input terminal 8. the dimension t₁ in the thickness direction of the hole 14 provided on the case cap 6 is smaller than the dimension t₂ in the thickness direction of the lanced and raised piece 15. Thus, the input terminal 8 can be locked to a predetermined location in a manner similar to that shown in Figure 2.

The technique illustrated in Figures 3 and 4 has a better engaging and locking action than that shown in Figure 2, because of the resiliency of the lanced and raised piece 15. However, the ability to withstand the external force P is small because of the frictional force between the lanced and raised piece 15 and the hole 14. The same problem exists with regard to chips generated when the input terminal 8 is press-fitted to the hole 14.

Figure 5 illustrates still another known means for fitting the input terminal 8 to the case cap 6. Again, like parts are indicated by like numerals in Figure 4. In Figure 5, the lanced and raised piece 15 is formed on the terminal 8 in such a location that it passes through and appears on the outer end face of the case cap 6 when the terminal is press-fitted into the hole 14. This allows the lanced and raised piece 15 to act as a retaining stopper to withstand the external force P in the direction shown by the arrow.

The Figure 5 technique does not resolve the problem of chips generated, as in the case of the embodiment shown in Figure 4, because the lanced and raised piece 15 is in frictional contact with the inside surface of the hole 14 as the input terminal 8 is press-fitted into the hole 14. In addition, there is a likelihood of the size t₃ of the hole 14 in the thickness direction being larger than the thickness t of the input terminal 8, thus reducing the effectiveness of the engaging and locking action. Further an undesirable gap C can be formed between the free end of the lanced and raised piece 15 and the outer end face of the case cap 6, or alternatively, the free end of the lanced and raised piece might be not completely exposed on the outer end face of the case cap 6.

Figures 6 and 7 illustrated a case cap in one embodiment of the present invention. Like parts are indicated by like numerals used in earlier Figures. Firstly though, it will be noted that the cross-sectional internal dimension of the hole 14 provided on the case cap 6 is made essentially the same as the cross-sectional external dimensions of the input terminal 8. The lanced and raised retainer piece is formed on the input terminal 8 only after the input terminal 8 is press-fitted into the hold 14 and engaged with or fitted to a predetermined location.

Since the input terminal 8 is in close contact with the hole 14 in the case cap 6, and the free end 15a of the lanced and raised piece 15 positively comes in contact with the outer end face 6a of the case cap 6, the free end 15a acts as an effective stopper, increasing the retaining effect, even if external force P is exerted. No chips are generated when the input terminal 8 is installed, even when the external dimensions of the terminal are made essentially the same as the internal dimensions of the hole 14, because the lanced and raised piece 15 has not yet been formed. Thus, the surface and surrounding areas of the input terminal 8 and the brushes (not shown), as well as the motor interior, can be kept clean.

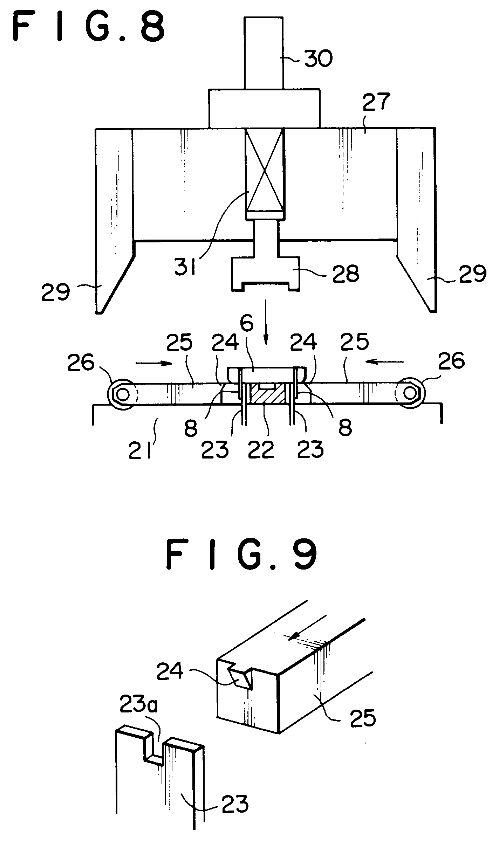

The input terminal fitting jig illustrated in Figure 8 comprises a table 21 having a holder 22 at the central part thereof, and receiving blades 23 at locations corresponding to the location at which the input terminals 8 of the case cap 6 are fitted. Lancing and raising blades 24 are provided in such a manner that they can be selectively engaged with the receiving blades 23, and moved horizontally on the table 21 on driving members 25. Rollers 26 are provided at the rear ends of the driving member 25 having the lancing and raising blade 24.

A working member 27 is movable vertically on a guide (not shown) provided on the table 21; with a press-fitting member 28 provided at the central part thereof in such a manner as to be movable vertically with the working member 27, and roller retainers 29 that can engage with the rollers 26. A cylinder connecting shank 30 and a spring 31 are provided in such a manner as to drive the working member 27 and the press-fitting member 28.

Figure 9 is an enlarged view illustrating the receiving blade 23 and the lancing and raising blade 24 of Figure 8. A die 23a is formed by cutting the upper end of the receiving blade 23 in a in a square or U shape in such a manner as to receive the lancing and raising blade 24 protruding in a triangular shape in longitudinal section from the respective driving member 25. The receiving blade 23 and the lancing and raising blade 24 should preferably be formed using a jig material, such as tool steel. The upper end surfaces of the receiving blade 23 and the lancing and raising blade 24 are formed in such a manner as to be flush with the upper end surface of the holder 22; that is, the outer end surface of the case cap 6.

In the use of the jig of Figure 8, a case cap 6 is first placed and positioned on the holder 22 as shown, with the inner face upward. The input terminals 8, each with a brush 7 bonded thereto, are disposed over the openings 14, and the working member 27 and the press-fitting member 28 are lowered, to press-fit the input terminals 8 into the case cap 6. As the working member 27 is lowered while the press-fitting member 28 remains engaged with the case cap 6, the roller retainers 29 engage the rollers 26, causing the driving members 25 to move inwards. Thus, the lancing and raising blades 24 proceeds and cut into the input terminals 8, and engage with the receiving blades 23 to form the lanced and raised pieces 15. As a result, the input terminal 8 is engaged with and fitted to the case cap 6 in a single operative sequence. Upon completion of the engaging and fitting operation, the component members are operated in the reverse direction and the case cap 6 is removed. Then, a new case cap is loaded to repeat the above operation.

The table below shows the measurement results of the pulling force of the input terminals. Measurement was made on 20 pieces each of miniature motor caps of the same specifications; No. 1 and No. 2 in the table being those shown in Figures 3 and 4 and Figure 5 respectively.

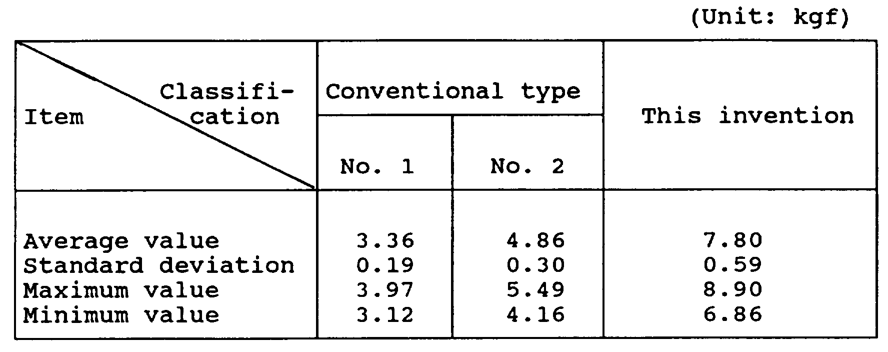

As is evident from the table, the input terminals of the known type have relatively low resistance to pulling force, and the input terminal 8 even fell off with one sample from the No. 1 group. Furthermore, chips were generated and the brush 7 was deformed when one input terminal was press-fitted into the case cap in the e No. 2 group. With the samples of this invention, on the other hand, a much higher resistance to pulling force was apparent, without any generation of chips nor any deformation of the brush 7. As a result it was confirmed that motor performance and reliability are substantially improved.

In this description examples are given in which the lanced and raised retain piece 15 is provided inside the input terminal 8. But the lanced and raised piece 15 may be provided outside the input terminal 8 or at other appropriate locations, depending on the direction in which the input terminal 8 is provided. In short, lancing and raising operations may be carried out in the thickness direction of the input terminal 8. The shape and size of the lanced and raised piece may be appropriately selected, taking into account the material, shape and size of the input terminal 8. Furthermore, as the means for driving the input terminal fitting jig, driving means other than cylinders may be used.

The embodiment of the invention as described herein can achieve the following effects.
(1) Since the lanced and raised retainer piece can positively come in contact with the outer end face of the case cap, acting as a stopper, a sufficient resistance to external forces is imparted to the input terminal, eliminating the accidental detachment of input terminals, substantially improving reliability.
(2) Because the lanced and raised piece is formed after the input terminal is press-fitted to the case cap, the input terminal can be relatively easily press-fitted into the case cap, producing virtually no chips during press-fitting, unlike the conventional input terminals, thereby improving motor characteristics.
(3) Because of (2) above, there is less risk that the input terminal is wrongly fitted or deformed during installation. This is particularly useful in the manufacture of miniature motors having small input terminals.
(4) The lanced and raised piece can be formed in the same process as the press-fitting of the input terminal to the case cap. Thus, miniature motors of this invention can be manufactured in essentially the same process as the conventional miniature motors, without increase in the number of operations.

## Claims

1. A method of mounting input terminals (8) in an end cap (6) for the case (1) of an electric motor, which end cap (6) is formed in a plastics material and has an inner and an outer face, the method comprising press-fitting the terminals (8) through the cap (6) from the inner face thereof such that they project from the outer face, and
CHARACTERISED BY
the step of forming lanced and raised elements (15) on the projecting portions of the terminals (8), the elements (15) extending over the outer face with their free ends (15a) in contact therewith to prevent withdrawal of the terminals through the cap (6).

2. A method according to Claim 1 wherein the cap (6) is formed with holes for receiving the terminals (8), which holes each have a cross-section substantially equal to that of each terminal (8).

3. A method of manufacturing an electric motor including a method according to Claim 1 or Claim 2, which motor comprises a cylindrical case (1) closed at one end and an end cap (6) formed in a plastics material with an inner and an outer face closing the other end, a permanent magnet (2) fitted to the inner surface of the case (1), a rotor (5) with a commutator (4) and an armature (3) rotatably mounted in bearings (9,10) in the end cap (6) and said one end of the case (1) respectively, and brushes (7) mounted in the end cap (6) making sliding contact with the commutator (4), the brushes (7) being electrically connected to input terminals (8) which are mounted in the end cap (6) by a method according to Claim 1 or Claim 2.

4. An electric motor comprising a cylindrical case (1) closed at one end and an end cap (6) formed in a plastics material with an inner and an outer face closing the other end, a permanent magnet (2) being fitted to the inner surface of the case (1), and a rotor (5) with a commutator (4) and an armature (3) rotatably mounted in bearings (9,10) in the end cap (6) and said one end of the case (1) respectively, brushes (7) mounted in the end cap (6) making sliding contact with the commutator (4), and electrically connected to input terminals (8) mounted in the end cap (6), the input terminals (8) being press-fitted in the case cap (6) from the inner surface thereof,
CHARACTERISED IN THAT
the terminals (8) are formed with lanced and raised portions (15) which extend over the outer face with their free ends (15a) in contact therewith to prevent withdrawal of the terminals through the cap (6).

## Patentansprüche

1. Ein Verfahren für den Einbau von Anschlußklemmen (8) in einen Verschlußdeckel (6) eines Gehäuses (1) von einem Elektromotor, wobei der Verschlußdeckel (6) aus Kunststoff geformt ist und eine Innen- und eine Außenfläche aufweist, und das Verfahren eine Presspassung der Klemmen (8) von der Innenfläche durch den Verschlußdeckel (6) hindurch umfaßt, so daß sie aus der Außenfläche herausragen, und
**gekennzeichnet durch**
den Arbeitsschritt der Formung von eingeschnittenen und hochgebogenen Teilen (15) auf den herausragenden Abschnitten der Klemmen (8), wobei sich diese Teile (15) mit ihren freien Enden (15a), die die Außenfläche berühren, über diese hinweg erstrecken um das Zurückziehen der Klemmen durch den Verschlußdeckel (6) hindurch zu verhindern.

2. Ein Verfahren nach Anspruch 1, wobei der Verschlußdeckel (6) mit Löchern für das Aufnehmen der Klemmen (8) ausgebildet wird, und die Löcher einen Querschnitt aufweisen, der im wesentlichen demjenigen der Klemmen (8) entspricht.

3. Ein Verfahren für die Herstellung eines Elektromotors, welches ein Verfahren nach Anspruch 1 oder Anspruch 2 einschließt, wobei der Motor aufweist: ein zylindrisches Gehäuse (1), das an einem Ende geschlossen ist und einen Verschlußdeckel (6) mit einer Innen- und einer Außenfläche, der aus Kunststoff geformt ist und das andere Ende verschließt, einen Permanentmagneten (2), der an die Innenseite des Gehäuses (1) angepaßt ist, einen Rotor (5) mit einem Kommutator (4) und einem Anker (3), der in Lagern (9,10) im Verschlußdeckel (6) bzw. im geschlossenen Ende des Gehäuses (1) drehbar gelagert ist, und Bürsten (7), die in den Verschlußdeckel (6) eingebaut sind und in Schleifkontakt mit dem Kommutator (4) stehen, wobei die Bürsten (7) mit den Anschlußklemmen (8) elektrisch leitend verbunden sind und letztere mittels einem Verfahren nach Anspruch 1 oder Anspruch 2 in den Verschlußdeckel (6) eingebaut sind.

4. Ein Elektromotor, der aufweist: ein zylindrisches Gehäuse (1), das an einem Ende geschlossen ist und einen Verschlußdeckel (6) mit einer Innen- und einer Außenfläche, der aus Kunststoff geformt ist und das andere Ende verschließt, einen Permanentmagneten (2), der an die Innenseite des Gehäuses (1) angepaßt ist, und einen Rotor (5) mit einem Kommutator (4) und einem Anker (3), der in Lagern (9,10) im Verschlußdeckel (6) bzw. im geschlossenen Ende des Gehäuses (1) drehbar gelagert ist, Bürsten (7), die in den Verschlußdeckel (6) eingebaut sind, wobei sie in Schleifkontakt mit dem Kommutator (4) stehen, und mit den Anschlußklemmen (8), die in den Verschlußdeckel (6) eingebaut sind, elektrisch leitend verbunden sind, wobei die Anschluß- klemmen (8) von der Innenfläche her mit einer Preßpassung in den Verschlußdeckel (6) eingepaßt sind,
**dadurch gekennzeichnet,**
daß die Klemmen (8) mit eingeschnittenen und hochgebogenen Teilen (15) ausgebildet sind, wobei sich diese Teile (15) mit ihren freien Enden (15a), die die Außenfläche berühren, über diese hinweg erstrecken um das Zurückziehen der Klemmen durch den Verschlußdeckel (6) hindurch zu verhindern.

## Revendications

1. Procédé pour le montage de bornes d'entrée (8) sur un capot d'extrémité (6) du boîtier (1) d'un moteur électrique, lequel capot d'extrémité (6) est fabriqué en une matière plastique et comporte une face intérieure et une face extérieure, le procédé comprenant l'adaptation à force des bornes (8) à travers le capot (6) depuis sa face intérieure de façon à ce que les bornes dépassent de la face extérieure, et
caractérisé par
l'opération de préparation d'éléments (15) découpés et dégagés sur les parties dépassantes des bornes (8), les éléments (15) s'étendant au-dessus de la face extérieure avec leurs extrémités libres (15a) en contact avec cette face afin d'empêcher le dégagement des bornes à travers le capot (6).

2. Procédé selon la revendication 1, dans lequel le capot (6) est préparé avec des orifices pour recevoir les bornes (8), lesquels orifices ont une section transversale sensiblement égale à celle de chaque borne (8).

3. Procédé de fabrication d'un moteur électrique, comprenant un procédé selon la revendication 1 ou la revendication 2, lequel moteur comprend un boîtier cylindrique (1) fermé à une extrémité et un capot d'extrémité (6) préparé en une matière plastique ayant une face intérieure et une face extérieure fermant l'autre extrémité, un aimant permanent (2) adapté à la surface intérieure du boîtier (1), un rotor (5) avec un collecteur (4) et un induit (3) montés à rotation dans des paliers (9, 10) dans le capot d'extrémité (6) et dans ladite première extrémité du boîtier (1) respectivement, et des balais (7) montés dans le capot d'extrémité (6) venant en contact coulissant avec le collecteur (4), les balais (7) étant électriquement reliés aux bornes d'entrée (8) qui sont montées dans le capot d'extrémité (6) par un procédé selon la revendication 1 ou la revendication 2.

4. Moteur électrique comprenant un boîtier cylindrique (1) fermé à une extrémité et un capot d'extrémité (6) construit en une matière plastique avec une face intérieure et une face extérieure fermant l'autre extrémité, un aimant permanent (2) étant adapté sur la surface intérieure du boîtier (1), et un rotor (5) avec un collecteur (4) et un induit (3) montés à rotation dans des paliers (9, 10) dans le capot d'extrémité (6) et dans ladite première extrémité du boîtier (1) respectivement, des balais (7) montés dans le capot d'extrémité (6) venant en contact coulissant avec le collecteur (4), et reliés électriquement aux bornes d'entrée (8) montées dans le capot d'extrémité (6), les bornes d'entrée (8) étant montées à force dans le capot d'extrémité (6) depuis sa surface intérieure,
caractérisé en ce que
les bornes (8) sont construites avec des parties découpées et dégagées (15) qui s'étendent au-dessus de la face extérieure avec leurs extrémités libres (15a) en contact avec cette face afin d'empêcher le dégagement des bornes à travers le capot (6).
